# EUROPEAN PATENT APPLICATION

(11) **EP 4 595 746 A1**
(43) Date of publication of application: **06.08.2025**
(21) Application number: 25154275.9
(22) Date of filing: 27.01.2025
(51) Int. Cl.: A01K 97/04, A47J 19/00, B01D 24/00

(54) **DEVICE FOR COATING BAIT**

(30) Priority: 30.01.2024 GB 202401194
(71) Applicant: Korda Developments Limited, Basildon, Essex SS14 0HW (GB)
(72) Inventor: Dalton, Brandon, Basildon, SS14 0HW (GB)
(74) Representative: Burnett, Christopher James

(57) **Abstract**

A device for coating bait. The device comprises a container (3) comprising a base (32) and at least one side wall (34). The container further comprises at least one drainage formation (5) which is integral with the container (3). There is also provided a method of coating bait in a container.

## Description

### Introduction

This invention is a device for coating bait and in particular a device for coating bait in a liquid for attracting marine life for use in angling. This invention is further directed to a method of coating bait.

An angler may wish to coat bait, and in particular solid fishing bait such as bait pellets in a liquid additive, which may include liquids generally referred to as an attractor, in order to attract marine life, such as fish. In such cases the angler will use a container to contain and then coat the bait with the liquid. Such prior art containers, which are commonly referred to as bait pots or glug pots comprise a container body, lid, and a removable colander, the colander being removably placeable into the container. The solid bait is placed onto the colander in the container, and the liquid is then applied to the bait so that the bait "steeps" in the container. Excess liquid poured onto the bait can thus drain through the colander so that the bait is not excessively steeped in the liquid. Once the bait is ready for use the colander containing the bait is removed from the container. However, this arrangement produces a number of problems. GB 2252363 A is an example of such a container, disclosing an insertable and removable colander with perforations to allow the liquid to drain therefrom when the colander is removed from the container.

For example, this prior art design of container requires the use of multiple independent components such as the insertable colander which can be easily misplaced or lost when angling. Also, the insertable colander makes the design difficult to keep clean to a suitable standard due to the separate components with a complex geometry. Furthermore, providing different components makes this prior art design difficult and expensive to manufacture.

US 2016/309691 A1 discloses a different way of attracting marine life when angling, disclosing a perforated container that is attached to a fishing line, submerged with the hook and bait, and which then releases bait into the marine environment.

It is an aim of the present invention to overcome these problems and to provide a device for coating bait.

### Summary of the Invention

According to the present invention there is provided a device for coating bait comprising:
(i) a container comprising a base and at least one side wall; and
(ii) at least one drainage formation;
   and wherein
(iii) the at least one drainage formation is integral with the container.
The device of the present invention is advantageous in that the user is provided with a single-piece device rather than the separate container and colander of the prior art, thus allowing the user to easily clean the device and preventing the user from losing or misplacing components, furthermore the device being simpler and less expensive to manufacture than prior art devices.

Further, the device may comprise a lid for engagement with the at least one side wall for sealing the container.

The at least one drainage formation may comprise a protruded portion and a trough portion. The protruded portion may protrude into an inner chamber of the container defined by the base and at least one side wall, and a rough may be defined as a space adjacent the protruded portion. The protruded portion may allow the bait to be supported in order to be steeped in liquid yet permit excess liquid to drain into the trough portion. Further, the container may comprise a plurality of drainage formations, which may define a reservoir formed of interconnected troughs between the protruded portion of the drainage formations. The bait may be suspended by the protruded portions above the troughs and therefore above any excess liquid drained therein.

Adjacent protruded portions may be spaced apart at a distance smaller than the average diameter of a bait pellet, so that the bait pellet may straddle adjacent protruded portions and not fall into the trough and does not contact any excess liquid stored therein. Typically, the bait for use with the present device is generally spherical having a diameter of between 2 and 20 mm, or preferably between 5 and 10 mm. The distance between adjacent protruded portions, and therefore the width of the troughs, will therefore preferably be smaller than the width of the bait to be coated.

Further, the at least one drainage formation may be integral with the base of the container. Further still, the drainage formation may comprise a central portion. Preferably, the central portion may be substantially central to the base of the container. This is advantageous in that it allows the user to more easily clean the container as there is a single, integrated container and drainage formation.

Further, the plurality of drainage formations may be arranged in substantially concentric circles. Further, the plurality of drainage formations may be arranged in a substantially grid-like pattern. Further, the plurality of drainage formations may be arranged in a substantially diamond-like pattern.

Further, the protruded portion of the least one drainage formation may have an upper surface and a lower surface. Further still, the lower surface may match the contours and profile of the upper surface of each drainage formation so that a raised area, in the form of an indent relative to the base, may be formed beneath each drainage formation.

This is advantageous in that it reduces mechanical complexity and allows the container to be manufactured in one piece and with simpler methods of manufacturing as compared to prior art devices, such as by injection moulding. This is further advantageous in that it allows the device to be manufactured with a single mould with the drainage formations integral, which saves on manufacturing costs compared to producing a device with multiple components.

Further, the device may be manufactured from a plastics material. Further, the lid may be connectable to the container via a releasable attachment means which may comprise a threaded connection. Further, the releasable attachment means may comprise a clip. Further, the releasable attachment means may comprise a push-fit connection. Further, the lid may connect to the container via a hinged connection. Further, the lid may comprise a lip which may preferably be substantially knurled on an outer surface.

According to a further aspect of the invention there may be provided a method of coating bait comprising the steps of:
(i) placing a liquid for attracting fish into a container comprising a base and at least one side wall and at least one drainage formation;
(ii) placing bait into the container; and
(iii) agitating the container to cover the bait in the liquid; and wherein
(iv) after agitation, excess liquid drains into the drainage formation to prevent the bait from becoming oversaturated in liquid.
The device of the present method may be as previously described.

According to a further aspect of the invention the drainage formation may be integral with the side wall of the container. Further, the drainage formation may be disposed a distance from the base of the container. Further still, the drainage formation may comprise a sieve comprising a series of apertures. This drainage formation is advantageous in that it allows the user to coat the bait in the liquid with excess liquid able to drain through the apertures and away from the bait so that the bait can steep in an appropriate amount of liquid such that a user can keep the bait in the container for a longer time without the bait degrading.

It is to be appreciated that the embodiments of the invention described above have been given by way of example only and that modifications or combinations of features of the device in its various embodiments may be affected. The invention also extends to the individual components mentioned above, taken singly or in any combination.

### Description of the Drawings

The invention will now be described solely by way of example and with reference to the accompanying drawings in which:
Figure 1 shows a cross-sectional view of a prior art bait container;
Figure 2 shows a cross-sectional view of an embodiment of the present invention;
Figure 3 shows a plan view of the embodiment of Figure 2;
Figure 4 shows an isometric underside view of the embodiment of Figure 2 and Figure 3;
Figure 5 shows a cross-sectional view of the embodiment of Figures 2 to 4, the container containing bait and an attractant liquid, the container being in an agitated state;
Figure 6 shows a schematic cross-sectional view of an embodiment of the present invention with drainage formations in a pattern of concentric circles 30 integral with the base of the container;
Figure 7 shows a plan view of the embodiment of Figure 6;
Figure 8 shows a cross-sectional view of an embodiment of the present invention with drainage formations in a grid pattern integral with the base of the container;
Figure 9 shows a plan view of the embodiment of Figure 8;
Figure 10 shows a flow chart of the method according to the present invention;
Figure 11 shows a cross-sectional view of an embodiment of the present invention with drainage formations in a sieve pattern; and
Figure 12 shows a plan view of an embodiment of Figure 11.

### Detailed Description of the Invention

As used herein the words pool or pooling refer to a liquid gathering in a container when the liquid is not agitated, and this is understood to refer to the liquid gathering in the respective parts of the container when at rest.

As used herein the word agitate or agitated refer to a user manually agitating the device, such as by shaking the device, and this is understood to refer to the liquid and bait rapidly moving throughout the container in order to coat the bait in the liquid.

As used herein the words coat, coating or coated refer to coating in a liquid, this is understood to refer to the bait being coated by the liquid to a desired level of saturation.

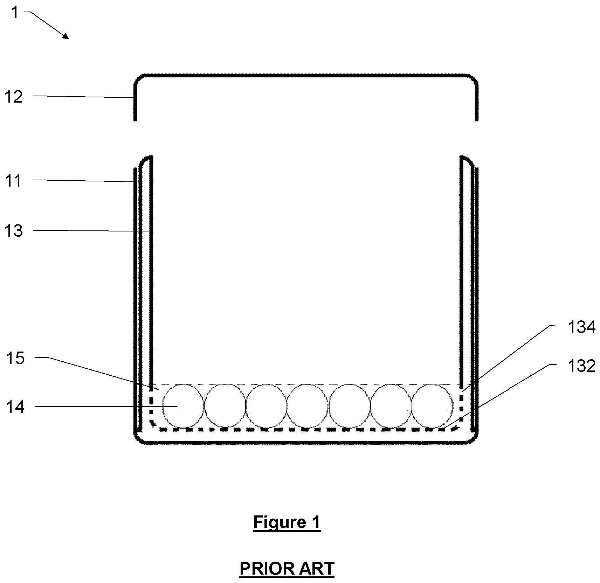

Referring to Figure 1 there is shown a prior art bait pot generally indicated 1 comprises a container 11, a releasably attachable lid 12 and a colander 13. The colander 13 is placed inside the container 11 when in use and comprises a plurality of apertures 132 on a lower surface 134 thereof. Bait 14 is placed in to the colander 13, which is then placed in the container 11, followed by a liquid attractant 15 for attracting fish. The container is then agitated to coat the bait in the liquid, and some of the excess liquid is then poured away for subsequent reuse. Any excess liquid then drains through the apertures 132 in the colander 13 so that the bait is not excessively saturated.

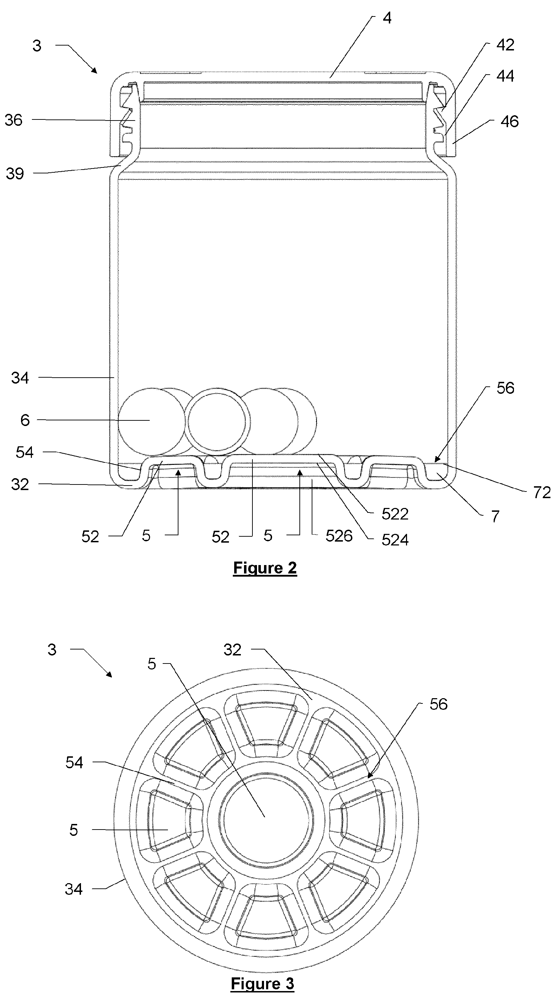

Referring to Figure 2 there is shown a device according to the present invention comprising a bait container generally indicated 2 for coating bait comprising a container 3 comprising a base 32 and at least one side wall 34, which extends around the base. There is also shown a releasably attachable lid 4 for engagement with the at least one side wall 34 for sealing the container 3. The container 3 also comprises a drainage formation 5. The lid 4 attaches to the at least one side wall 34 via a releasable attachment means comprising a threaded connection 42 on an interior surface 44 of a lip 46 of the lid 4 and an equivalent threaded section on a neck 36 of the container 3 on an end of the at least one side wall 34 opposite the base 32. The neck 36 of the container 3 is of a reduced diameter relative to that of a lower portion 38 of the container 3 disposed between the base 32 and the neck 36. The lower portion of the container transitions to the neck via a sloped shoulder 39 of suitable proportions that a knurled, outer surface 48 of the lip 46 of the lid 4 is substantially of the same diameter as the at least one side wall 34 of the container 3.

Referring to Figures 2 to 4 there is shown at least one drainage formation 5 which comprises a protruded portion 52 which is integral with and forms at least part of the base 32 of the container 3, and a trough portion 54. The protruded portion 52 allows the bait 6 to be supported in order to be steeped in the liquid 7 yet permits excess liquid 7 to drain into the trough portion 54. The container comprises a plurality of drainage formations 5, which define a reservoir 56 formed of interconnected troughs 54 between the protruded portion 52 of the drainage formations 5. The bait 6 is suspended by the protruded portions 52 above the troughs 54 and therefore above the surface 72 of any excess liquid 7 drained therein.

Each drainage formation 5 has an upper surface 522 and a lower surface 524, the lower surface 524 matching the contour of the upper surface 522 of each drainage formation 5 so that a hollow area 526, in the form of an indent relative to the base 32, is formed beneath each drainage formation 5.

At least one drainage formation 5 is substantially central to the base 32 of the container 3 and extends a distance from the centre of the container 3 and the at least one side wall 34. The container 3 also comprises a plurality of further drainage formations 5 which are arranged adjacent to the at least one drainage formation 5 central to the base of the container 3. In the embodiment shown in Figures 2 to 4 there is provided a plurality of further drainage formations 5 arranged circumferentially around the at least one drainage formation 5 central to the base of the container 3. The plurality of further drainage formations 5 are disposed between the at least one drainage formation 5 central to the base of the container 3 and the at least one side wall 34.

Adjacent protruded portions 52 of the drainage formations 5 are spaced apart at a distance smaller than the average diameter of a bait pellet 6, so that the bait pellet 6 may straddle adjacent protruded portions 52 and not fall into the trough 52 and does not contact any excess liquid 7 stored therein.

The at least one further drainage formation 5 is disposed a short distance from the at least one drainage formation 5 and the at least one side wall 34. As shown in Figures 2 to 4 the plurality of drainage formations 5 are disposed a short distance from each other.

Typically, the bait 6 for use with the present device is generally spherical having a diameter of between 2 and 20 mm, or preferably between 5 and 10 mm. Therefore, any trough 54 of a drainage formation 5 has a width of less than that of the bait 6, so that any bait 6 resting in a trough 54 during use is suspended and does not contact any excess liquid stored therein, as shown in Figure 2. Adjacent protruded portions may be spaced apart by 1-15 mm.

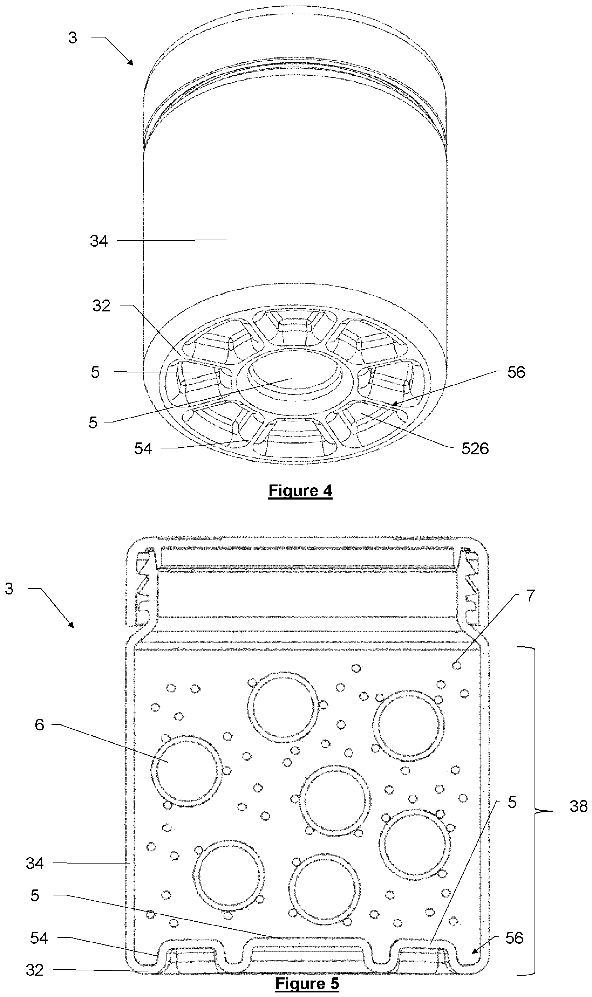

Referring to Figure 5 the container is shown in an agitated state, such as being shaken by a user, where the liquid 7 for attracting fish and the bait 6 are dispersed throughout the container 3 and come into contact, coating the bait 6 in the liquid 7. Once the agitation of the container ceases the remaining liquid 7 can be decanted from the container and any excess liquid will drain into the reservoir 56 formed by the troughs 54, as shown in Figure 2.

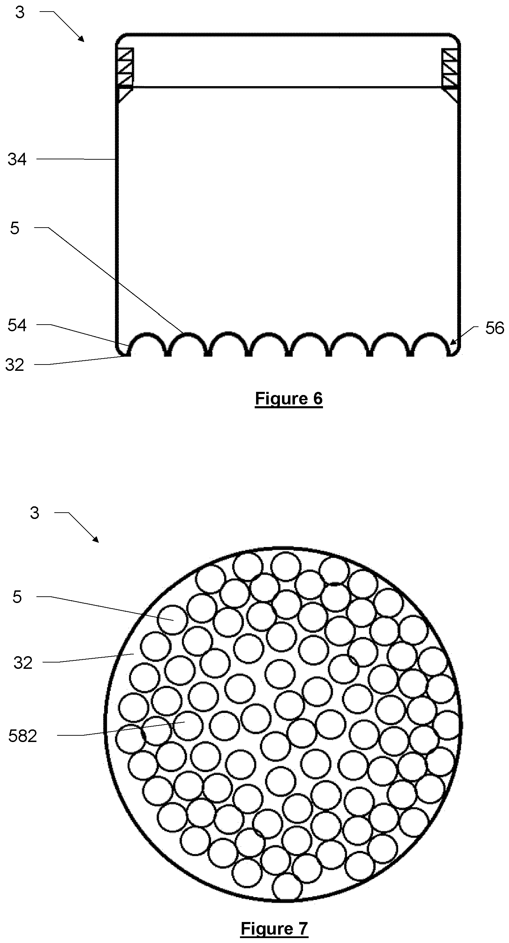

Referring to Figures 6 and 7 there is shown a further aspect of the invention where there are a plurality of drainage formations 5 each comprising a protruded portion 52 integral with and forming at least part of the base 32 of the container generally indicated 3, and a trough portion 54. The protruded portion 52 allows the bait 6 to be supported in order to be steeped in the liquid 7 yet permits excess liquid 7 to drain into the trough portion 54. The container comprises a plurality of drainage formations 5, which define a reservoir 56 formed of interconnected troughs 54 between the protruded portion 52 of the drainage formations 5. The bait 6 is suspended by the protruded portions 52 above the throughs 54 and therefore above the surface 72 of any excess liquid 7 drained therein.

The plurality of drainage formations 5 have an upper surface 522 and a lower surface 524, the lower surface 524 matching the contour of the upper surface 522 of each formation 5 so that a hollow area 526, in the form of an indent relative to the base 32, is formed beneath each drainage formation 5.

Adjacent protruded portions 52 of drainage formations 5 are spaced apart at a distance smaller than the average diameter of a bait pellet 6, so that the bait pellet 6 may straddle adjacent protruded portions 52 and not fall into the trough 52 and does not contact any excess liquid 7 stored therein. Typically, the bait for use with the present device is generally spherical having a diameter of between 2 and 20 mm, or preferably between 5 and 10 mm.

The plurality of drainage formations 5 are configured in a pattern of a series of concentric circles 582 around the base 32 of the container 3. The outer concentric circle 582 is disposed a distance from the at least one side wall 34 of the container 3.

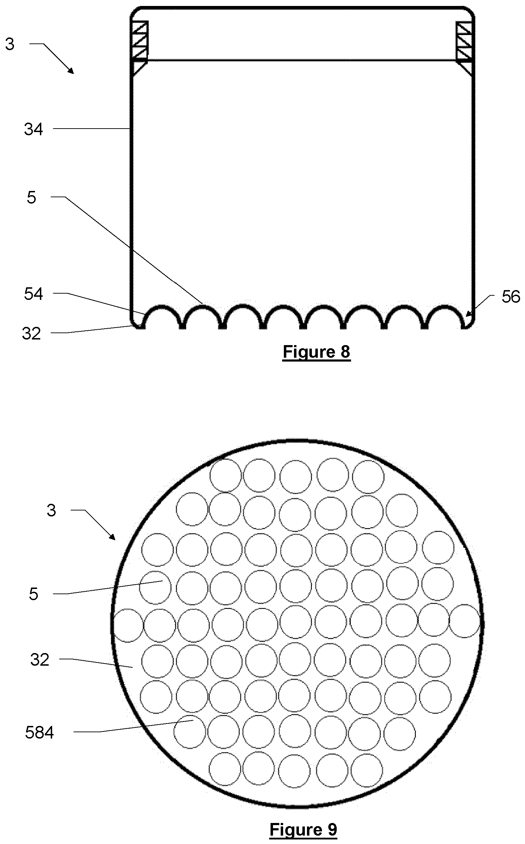

Referring to Figures 8 and 9 there is shown a further aspect of the invention where the at least one drainage formation 5 comprises a plurality of drainage formations 5 each comprising a protruded portion 52 integral with and forming at least part of the base 32 of the container 3, and a trough portion 54. The protruded portion 52 allows the bait 6 to be supported in order to be steeped in the liquid 7 yet permits excess liquid 7 to drain into the trough portion 54. The container comprises a plurality of drainage formations 5, which define a reservoir 56 formed of interconnected troughs 54 between the protruded portion 52 of the drainage formations 5. The bait 6 is suspended by the protruded portions 52 above the troughs 54 and therefore above the surface 72 of any excess liquid 7 drained therein..

The plurality of drainage formations 5 have an upper surface 522 and a lower surface 524, the lower surface 524 matching the contour of the upper surface 522 of each formation 5 so that a hollow area 526, in the form of an indent relative to the base 32, is formed beneath each drainage formation 5.

Adjacent protruded portions 52 of drainage formations 5 are spaced apart at a distance smaller than the average diameter of a bait pellet 6, so that the bait pellet 6 may straddle adjacent protruded portions 52 and not fall into the trough 52 and does not contact any excess liquid 7 stored therein.

The plurality of drainage formations 5 are arranged in a pattern of a grid series 584 around the base 32 of the container 3. The drainage formations 5 adjacent the at least one side wall 32 are disposed a distance from the at least one side wall 34 of the container 3.

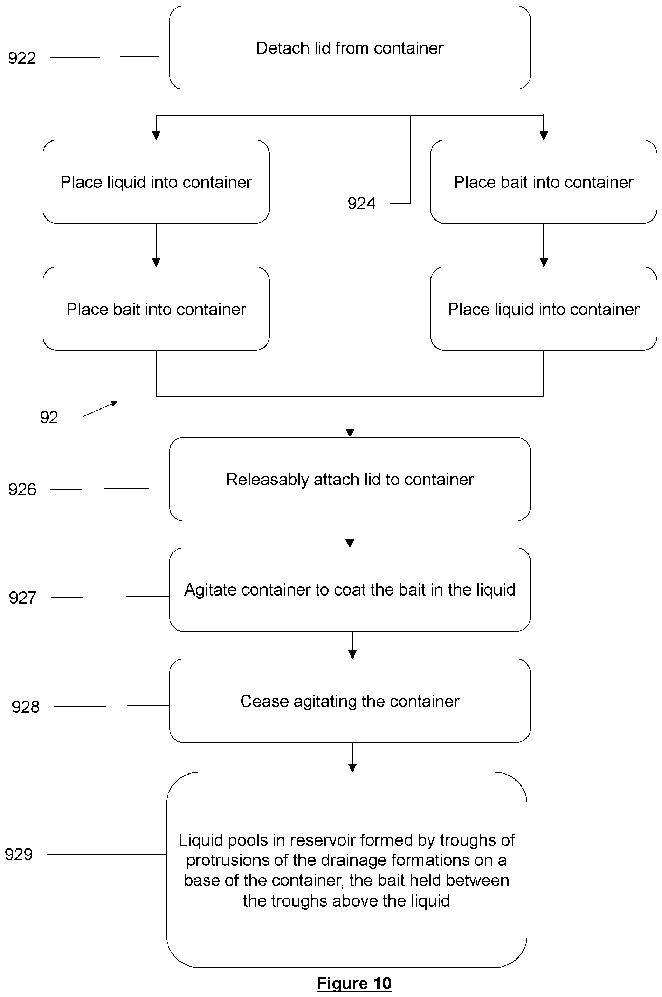

Referring to Figure 10 there is shown a further aspect of the invention comprising a method generally indicated 92 of use for coating bait comprising the steps of:
(922) detaching a lid from a container; and
(924) either placing a liquid for attracting fish into a container and then placing bait for attracting fish into the container; or placing bait for attracting fish into a container and then placing the liquid for attracting fish into the container; and
(926) placing the lid on the container, sealing the container; and
(927) agitating the container to cover the bait in the liquid; and wherein
(928) the user ceases agitating the container;
(929) and the liquid pools in a reservoir formed by a plurality of drainage formations comprising a protruded portion and a trough portion, the reservoir being formed by the troughs between the protruded portion of the drainage formations; and the bait being suspended in the troughs above the surface of the pooled liquid.

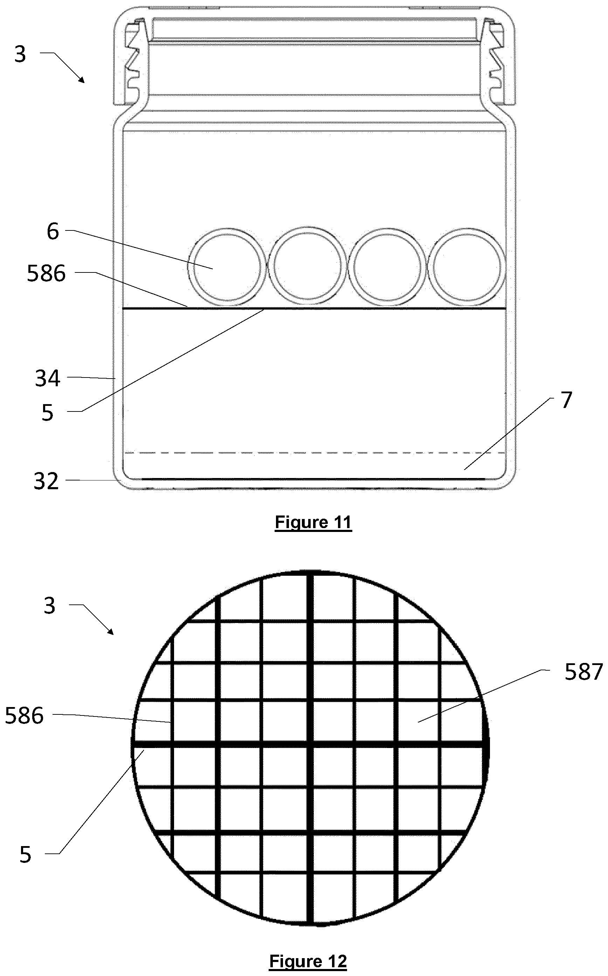

Referring to Figures 11 and 12 there is shown a further aspect of the invention where the at least one drainage formation 5 comprises a sieve 586 integral with the at least one side wall 34 of the container 3. The sieve 586 is disposed a distance from the base 32 of the container 3 and the neck 36 of the container 3 and comprises a series of apertured 587. The liquid 7 sits in the container 3, below the sieve 586 and the bait 6 is placed on the sieve 586 above the liquid 7. When the container 3 is not being agitated the bait 6 and the liquid 7 are not in contact.

Typically, the bait for use with the present device is generally spherical having a diameter of between 2 and 20 mm, or preferably between 5 and 10 mm. Therefore, the apertures 587 of the sieve 586 have a width of less than that of the bait, so that any bait resting in an aperture 587 during use is suspended and does not contact any excess liquid 7 stored therein.

It is to be appreciated that the embodiments of the invention described above with reference to the accompanying drawings have been given by way of example only and that modifications may be affected. Other constructions for the at least one drainage formation 5, the protruded portion 52, the troughs 54, the reservoir generally indicated 56 formed by the troughs 54 and various releasable attachment means for the lid 4 may be employed. Individual components shown in the drawings are not limited to use in their drawings and they may be used in other drawings and in all aspects of the invention. The invention also extends to the individual components mentioned and/or shown above, taken singly or in any combination.

## Claims

1. A device for coating bait comprising:
(i) a container (3) comprising a base (32) and at least one side wall (34); and
(ii) at least one drainage formation (5);
**characterized in that**
(iii) the at least one drainage formation (5) is integral with the container (3).

2. A device according to claim 1, **characterized in that** the at least one drainage formation (5) comprises a protruded portion (52) and a trough portion (54).

3. A device according to claims 1 or 2, **characterized in that** the at least one drainage formation (5) is integral with the at least one side wall (34) of the container (3).

4. A device according to claim 3, **characterized in that** the at least one drainage formation (5) is a distance from the base (32) of the container (3).

5. A device according to claims 1 to 4, **characterized in that** the at least one drainage formation (5) comprises a sieve (586).

6. A device according to claims 1 or 2, **characterized in that** the at least one drainage formation (5) is integral with the base (32) of the container (3).

7. A device according to claim 6, **characterized in that** the at least one drainage formation (5) comprises a central portion.

8. A device according to claim 7, **characterized in that** the central portion of the at least one drainage (5) is substantially central to the base (32) of the container (3).

9. A device according to claims 6 to 8, **characterized in that** the device comprises at least one drainage formation (5) arranged around the at least one drainage formation (5).

10. A device according to any preceding claim, **characterized in that** there is a plurality of drainage formations (5).

11. A device according to any preceding claim **characterized in that** the device comprises a lid for engagement with the at least one side wall (34) for sealing the container (3).

12. A method of use for a device for coating bait comprising the steps of:
(i) placing a liquid (7) for attracting fish into a container (3) comprising a base (32) and at least one side wall (34) and at least one drainage formation (5); and
(ii) placing bait (6) into the container (3); and
(iii) agitating the container (3) to cover the bait (6) in the liquid (7); and **characterized in that**
(iv) after agitation, excess liquid (7) drains into the drainage formation (5) to prevent the bait (6) from becoming oversaturated in liquid (7).

13. A method of use according to claim 13 comprising a step **characterized in that** the user ceases agitating the container and the liquid (7) pools in a reservoir (56) formed by a plurality of drainage formations (5) comprising a protruded portion (52) and a trough portion (54), the reservoir (56) being formed by the troughs (54) between the protruded portion (52) of the drainage formations (5); and the bait (6) being suspended in the throughs (54) above the surface (72) of the pooled liquid (7).

14. A method of use according to claims 12 or 13 comprising a step **characterized in that** a lid (4) is detached from the container (3) prior to placing a liquid (7) for attracting fish into a container (3).

15. A method of use according to claim 14 comprising a step **characterized in that** the container (3) is releasably attached the lid (4), sealing the container (3), after placing bait (6) for attracting fish into the container (3).
